# EUROPEAN PATENT APPLICATION

(11) **EP 1 983 601 A1**
(43) Date of publication of application: **22.10.2008**
(21) Application number: 07708223.8
(22) Date of filing: 08.02.2007
(51) Int. Cl.: H01M 10/44, H01M 2/10, H01M 10/48

(54) **BATTERY PACK**

(30) Priority: 09.02.2006 JP 2006032799
(71) Applicant: Kabushiki Kaisha Toshiba, Minato-ku, Tokyo 105-8001 (JP)
(72) Inventor: KOSUGI, Shinichiro, 1-1, Shibaura 1-Chome Minato-ku, Tokyo 105-8001 (JP); SHIBUYA, Nobuo, 1-1, Shibaura 1-Chome, Minato-ku, Tokyo 105-8001, (JP)
(74) Representative: Kramer - Barske - Schmidtchen
(86) International application number: PCT/JP2007/052199
(87) International publication number: WO 2007/091626

(57) **Abstract**

A plurality of cells are housed in a metal case with positive (+) terminals and negative (-) terminals thereof connected through a connection member. The metal case includes positive-side and negative-side external terminals, and the external terminals and terminals of respective cells are connected to each other by a lead wire. In the metal case, there are provided a protective circuit for preventing the respective cells from being overcharged or overdischarged and a battery output control switch interlocking with a power switch of the protective circuit. The power switch of the protective circuit is provided outside the metal case to permit turning-on/off operations from the outside of the metal case.

## Description

### Technical Field

The present invention relates to a battery pack housing a plurality of cells in a case, and in particular, relates to a battery pack having a switch capable of operating a protective circuit for preventing overcharge and overdischarge by monitoring battery voltage.

### Background Art

As a technique for providing voltage monitoring control circuits or protective circuits for preventing overcharge and overdischarge in a battery pack housing a plurality of cells in a case, for example, there have been known techniques as disclosed in Patent Documents 1 to 3.

Patent Document 1 (Japanese Patent Application Laid-Open No. 2004-111132) discloses that the number of protective circuits of a motor drive battery for an electric vehicle (EV) is reduced by grouping the batteries. Patent Document 2 (Japanese Patent Application Laid-Open No. 2003-217534) discloses protective circuits having a plurality of switch circuits so that respective cells are optimally charged even if initial states or performances of a plurality of cells are different from each other. Further, Patent Document 3 (Japanese Patent Application Laid-Open No. 11-341693) discloses protective circuits that detours charging current during overcharging of respective battery modules when a plurality of battery modules including a plurality of cells are connected.

However, a conventional battery pack as proposed in the above Patent Documents needs a power supply for driving protective circuits to always operate the protective circuits regardless of whether or not a battery is in use.

This power supply is obtained from cells constituting a battery pack except when the battery pack is connected with a charging power supply, which causes a problem of shortening the discharging time of the cells. Especially, a large-sized power supply unit requires a number of battery packs and therefore, it is significantly wasteful as the whole power supply unit though power consumption of the power circuits is small in individual battery packs.

In a battery pack in which charging and discharging is frequently performed, the electric power consumed in a protective device may not cause a severe problem because the consumed electric power is additionally supplied immediately at the next charging. However, for example, in a power supply unit for transmission/distribution relays, the protective device needs to be operated only for a periodic inspection or charging and a battery pack is left for a long period until the next charging after charging is once performed. The battery pack continuously supplies power to the protective device for a long period during which the protective device is not operated. This leads to reduction of lifetime of the protective device.

A battery pack may also require displays showing battery lifetime, charging/discharging level, temperature and other battery states in addition to the protective circuits described above. In conventional techniques, the battery pack displays such information with an LED or a liquid crystal display, and continuously transmits data for display to an external monitoring device or a computer through a transmission line. These operations require significant power, which reduces the battery lifetime.

### Disclosure of the Invention

The present invention was conceived in consideration of the circumstances encountered in the prior art mentioned above and an object thereof is to provide a battery pack capable of improving battery lifetime by providing a power switch which can operate a protective circuit of the battery pack from the outside of the battery pack to stop power supply to the protective circuit during a period when the protective circuit is not required.

Another object of the present invention is to provide a battery pack capable of further improving battery lifetime by turning on and off the power switch with respect to display of battery states and data transmission in conjunction with the power switch of the protective circuit.

A further object of the present invention is to provide a battery pack capable of easily determining, after power switch on, the remaining battery level which will be reset by turning on/off of the power switch of the protective circuit by taking the remaining battery level, obtained based on the battery voltage before turning on the power switch, as an initial value in obtaining the remaining battery level after power switch on.

According to the present invention, a battery pack comprising:
an outer case;
a plurality of cells connected in series and housed in the case;
a protective circuit connected to the cells and configured to monitor a voltage of the protective circuit so as to prevent overcharge and/or overdischarge;
a power switch for turning on and off a power supply for driving the protective circuit; and
an output control switch turned on and off in conjunction with an operation of the power switch of the protective circuit provided in a power output circuit including the protective circuit for the cells.

In a preferred embodiment of the above aspect, it may be desired that the protective circuit comprises:
a switch control unit configured to perform on-off control of an output control switch synchronously with turning on/off of a protective circuit power switch;
a voltage monitoring unit connected with a voltage take-out wire extending from the respective cells, and configured to monitor voltages of the respective cells; and
a protective circuit power supply connected with the power switch and configured to stop the power supply to the protective circuit through an operation of the power switch from outside the case.

It may be desired that an inert gas such as nitrogen gas or argon gas fills a space between the outer case and the respective cells so as to seal the space, or a foam material such as urethane foam or styrene foam fills a space between the outer case and the respective cells so as to seal the space.

The battery pack may further include a communication unit configured to transmit, outside, a fact as to whether the battery is in a state to be charged and discharged, wherein the communication unit outputs a charging/discharging prohibition/permission state signal in conjunction with the power switch of the protective circuit.

In another aspect of the present invention, there is also provided a battery pack comprising:
a plurality of cells connected in series;
a protective circuit configured to monitor voltages of the respective cells to prevent overcharging and/or overdischarging;
a power switch that turns on and off power supply for driving the protective circuit to the protective circuit; and
a communication unit configured to transmit, outside, a fact as to whether the battery is in a state to be charged and discharged, wherein
the communication unit outputs a charge/discharge prohibition/permission state signal in conjunction with the power switch of the protective circuit.

In the above aspect, the battery pack may further include a remaining battery level detecting unit using a current integrator and configured to integrate currents flowing through the output circuit, wherein the remaining battery level detecting unit configured to measure a battery voltage upon turning-on of the power switch of the protective circuit, to calculate a remaining battery level from a voltage value in a state where current does not flow, to take the remaining level as an initial value for remaining level calculation, and to detect a remaining battery level from the current integrated value with a current integrator and the initial value, and wherein the output control switch is turned on after the calculation of the initial value by the remaining battery level detecting unit.

It may be desired that the power switch of the protective circuit concurrently turns on and off the power supply of the remaining battery level detecting unit.

The battery pack may further include a communication unit configured to transmit, outside, a remaining battery level obtained by the remaining battery level detecting unit.

According to the present invention of the characters mentioned above, when the power switch for the protective circuit is on, the output control switch closes and, when the power switch for the protective circuit is turned off, the output control switch opens.
Accordingly, when no power supply is supplied to the protective circuit, the battery is not available, which ensures the safety of the battery even when any troubles occur in the protective circuit. On the other hand, when the power switch for the protective circuit is off, no current flows through the protective circuit so that the battery is not wastefully consumed, and useful use of the battery is achieved.

### Brief Description of the Drawings

FIG. 1 is a sectional view illustrating a first embodiment of a battery pack according to the present invention.
FIG. 2 is a circuit diagram of the first embodiment illustrated in FIG. 1.
FIG. 3 is a circuit diagram illustrating a second embodiment of a battery pack according to the present invention.
FIG. 4 is a circuit diagram illustrating a third embodiment of a battery pack according to the present invention.

### Best Mode for Carrying Out the Invention

The embodiments of the present invention will be described hereunder with reference to the accompanying drawings.

### (1) First Embodiment

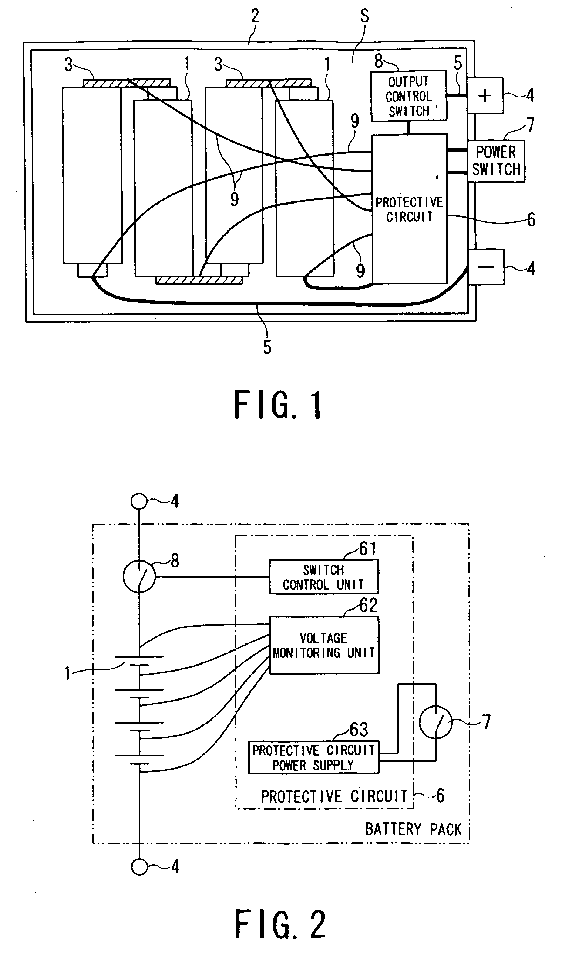

A first embodiment shown in FIG. 1 represents a basic configuration of the present invention, in which a columnar cell 1 has a positive (+) terminal and a negative (-) terminal at upper and lower ends thereof, respectively, and a plurality of such cells 1 are housed in a metal case 2 in an airtight and watertight manner, the metal case 2 being a press-molded or cast product made of iron or aluminum.

The plurality of cells 1 are housed, in a vertical orientation, alternately changed in the metal case 2, and one negative terminal thereof is connected to one positive terminal through a connection member 3 for a serial electrical connection. The metal case 2 has positive-side and negative-side external terminals 4, and the external terminals 4 are connected to terminals of the cells 1 each other through lead wires 5, respectively.

In the metal case 2, a protective circuit 6 is arranged for preventing overcharging and overdischarging of respective cells and a battery output control switch 8 interlocking with a power switch 7 of the protective circuit 6. The power switch 7 of the protective circuit 6 is attached to the outside of the metal case 2 so as to permit turning on/off operations of the switch 8 from the outside of the metal case 2.

The protective circuit 6 is disposed on an output lead 5 of the plurality of cells connected in series. To the protective circuit 6, voltage take-out wires 9 extending from positive (+) side and negative (-) side of the respective cells 1 are connected.

A space S between the metal case 2 and the each cell 1 is filled with an inert gas such as nitrogen gas or argon gas, or a foam material such as urethane foam or styrene foam.

FIG. 2 is a circuit diagram of a first embodiment having a configuration as described above. As illustrated in FIG. 2, the protective circuit 6 includes a switch control unit 61, a voltage monitoring unit 62, and a protective circuit power supply 63.

The switch control unit 61 performs on-off control of the output control switch 8 attached to the output lead 5 of the cell synchronously with turning on/off of the protective circuit power switch 7. The voltage monitoring unit 62, connected with the voltage take-out wire 9 extending from the respective cells 1, monitors the voltage of the respective cells 1 and stops charging or discharging operation before the occurrence of overcharging or overdischarging.

The protective circuit power supply 63, connected with the power switch 7, permits to stop power supply to the protective circuit 6 by operating the power switch 7 from the outside of the metal case 2. In this case, as the protective circuit power supply 63, a dedicated dry cell or the like may be used, but the present embodiment is configured so that the power supply is taken from the output lead 5 side of the cell.

In the first embodiment having such a configuration as mentioned above, the protective circuit power supply 63 is not turned on until the power switch 7 attached to the metal case 2 is turned on, and therefore, no power supply is applied to the protective circuit when the battery pack is not in use. Even in a configuration of taking out the power supply of the protective circuit from cells constituting the battery pack, the electric power of the cells will not be wasted on the protective circuit during the standby state of the battery.

Turning on/off operations between the power switch 7 and the output control switch 8 are interlocked, and therefore, the output control switch 8 will not be turned on unless the power switch 7 is turned on. Accordingly, in a state where the protective circuit 6 comes into no action, the cells are not charged or discharged, thus completely preventing the cells from being overcharged or overdischarged.

In the present first embodiment, the protective circuit 6 allows voltages of individual cells to be monitored. Accordingly, charging of the battery pack as a whole is stopped when the charging degree of a certain cell has reached 100%, thereby to prevent the cell from being overcharged.

Housing of the cells 1 in the rigid metal case 2 will cause no fire even if any cell bursts inside the metal case, enhancing the safeness. Especially, the use of the metal case having high rigidity can further improve the protection function of a cell against an external impact than a technique of preventing water invasion with a composite sheet, as described in Patent Document 3, and a metal case can be manufactured more easily than a case where the composite sheet is used.

Filling a space between the metal case 2 and the respective cells 1 with inert gas can improve fire resistance performance. In addition, filling with foam material such as urethane foam or styrene foam has the following advantages of preventing cell vibration in the metal case 2 as well as leakage of petroleum solvent and water invasion from the outside.

### (2) Second Embodiment

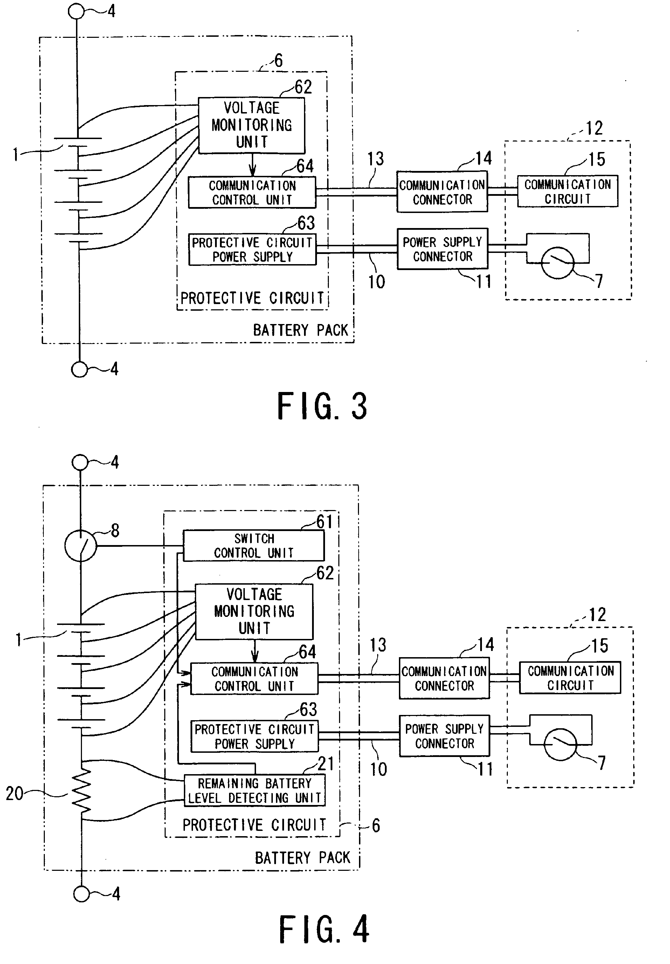

Although in the first embodiment, the power switch 7 of the protective circuit 6 is attached directly to a metal case 2, in the second embodiment illustrated in FIG. 3, a power supply line 10 is drawn out to the outside from the metal case 2 and a connector 11 provided at the front end of a power supply line 10 is connected with the power switch 7, which is attached to an external apparatus 12 such as a control panel or a personal computer.

Further, in the second embodiment, a communication control unit 64 is provided in a protective circuit 6, a communication line 13 is drawn out to the outside of the metal case 2 from the communication control unit 64 and a connector 14 provided at the front end of the communication line 13 is connected with a communication circuit 15 provided in the external apparatus 12.

In this case, the communication control unit 64 transmits voltage information of the respective cells from a voltage monitoring unit 62 provided in the protective circuit 6 and charging/discharging prohibition/permission information determined based on the voltage information to the communication circuit 15 of the external apparatus 12 through the communication line 13. The external apparatus 12 displays information obtained from the communication circuit 15 on a display unit and performs the charging and discharging operations to the respective cells in accordance with the information.

In the second embodiment, the output control switch 8 provided in the first embodiment is not provided in the metal case 2. This is because the external apparatus 12 performs charging and discharging operations based on charging/discharging prohibition/permission information obtained from communication unit. However, in the second embodiment, double safety measures may be adopted by providing the output control switch 8 in the metal case 2.

### (3) Third Embodiment

In a third embodiment illustrated in FIG. 4, a current detecting unit 20 is provided on an output circuit from a cell 1, and a remaining battery level detecting unit 21 having a current integrator for integrating current values detected by the current detecting unit 20 is also provided. The remaining battery level obtained by the remaining battery level detecting unit 21 is transmitted to a communication circuit 15 of an external apparatus 12 through a communication control unit 64 and a communication line 13. The power switch 7 of the protective circuit 6 concurrently turns on and off the power supply of the remaining battery level detecting unit 21.

The remaining battery level detecting unit 21 measures a battery voltage upon turning-on of the power switch 7 of the protective circuit 6, calculates a remaining battery level from a voltage in a state where no current flows, takes the remaining level as an initial value for remaining level calculation, and detects a remaining battery level from the current integrated value with a current integrator and the initial value. Further, the output control switch 8 is turned on after the calculation of the initial value with the remaining battery level detecting unit 21.

In the third embodiment having such a configuration as mentioned above, in a case where it is required to grasp a remaining battery level, current values obtained by the current detecting unit 20 using the current integrator are integrated, and the remaining battery level detecting unit 21 estimates a remaining battery level from the integrated value. In the third embodiment, the power switch 7 is provided in the protective circuit 6, and the remaining battery detecting unit 21 turns on and off power supply, in association with the power switch 7 of the protective circuit 6 to inhibit the current integration while the battery is stopping, thus increasing the accuracy in the calculation of the remaining battery level.

Voltage measurement is made without turning on of the output control switch 8 connected to a battery in series while the switch is on, and the capacity is estimated from the voltage value, which is taken as an initial value for current integration. Specifically, it is difficult to estimate the remaining battery level from the voltage value in the use of the battery, but exact estimation can be made from the voltage value while no current is flowing. The conventional technique of estimating the remaining battery level from the voltage value while the battery is in use always generates errors in current integration, and therefore, the estimated remaining level will deviate from an actual remaining level in a long period. However, the third embodiment provides an initial value every time when the power switch is turned on, and the deviation occurring during the current integration can be corrected at every use of a battery, thus achieving more accurate estimation of the remaining battery level.

## Claims

1. A battery pack comprising:
an outer case;
a plurality of cells connected in series and housed in the case;
a protective circuit connected to the cells and configured to monitor a voltage of the protective circuit so as to prevent overcharge and/or overdischarge;
a power switch for turning on and off a power supply for driving the protective circuit; and
an output control switch turned on and off in conjunction with an operation of the power switch of the protective circuit provided in a power output circuit including the protective circuit for the cells.

2. The battery pack according to claim 1, wherein the protective circuit comprises:
a switch control unit configured to perform on-off control of an output control switch synchronously with turning on/off of a protective circuit power switch;
a voltage monitoring unit connected with a voltage take-out wire extending from the respective cells, and configured to monitor voltages of the respective cells; and
a protective circuit power supply connected with the power switch and configured to stop the power supply to the protective circuit through an operation of the power switch from outside the case.

3. The battery pack according to claim 1, wherein an inert gas such as nitrogen gas or argon gas fills a space between the outer case and the respective cells so as to seal the space.

4. The battery pack according to claim 1, wherein a foam material such as urethane foam or styrene foam fills a space between the outer case and the respective cells so as to seal the space.

5. The battery pack according to claim 1, further comprising a communication unit configured to transmit, outside, a fact as to whether the battery is in a state to be charged and discharged, wherein the communication unit outputs a charging/discharging prohibition/permission state signal in conjunction with the power switch of the protective circuit.

6. A battery pack comprising:
a plurality of cells connected in series;
a protective circuit configured to monitor voltages of the respective cells to prevent overcharging and/or overdischarging;
a power switch that turns on and off power supply for driving the protective circuit to the protective circuit; and
a communication unit configured to transmit, outside, a fact as to whether the battery is in a state to be charged and discharged, wherein
the communication unit outputs a charge/discharge prohibition/permission state signal in conjunction with the power switch of the protective circuit.

7. The battery pack according to claim 1 or 6, further comprising a remaining battery level detecting unit using a current integrator and configured to integrate currents flowing through the output circuit, wherein the remaining battery level detecting unit configured to measure a battery voltage upon turning-on of the power switch of the protective circuit, to calculate a remaining battery level from a voltage value in a state where current does not flow, to take the remaining level as an initial value for remaining level calculation, and to detect a remaining battery level from the current integrated value with a current integrator and the initial value, and wherein the output control switch is turned on after the calculation of the initial value by the remaining battery level detecting unit.

8. The battery pack according to claim 7, wherein the power switch of the protective circuit concurrently turns on and off the power supply of the remaining battery level detecting unit.

9. The battery pack according to claim 7, further comprising a communication unit configured to transmit, outside, a remaining battery level obtained by the remaining battery level detecting unit.
